# FASCICULE DE BREVET EUROPEEN

(11) **EP 3 615 833 B1**
(45) Date de publication et mention de la délivrance du brevet: **28.09.2022**
(21) Numéro de dépôt: 18717954.4
(22) Date de dépôt: 24.04.2018
(51) Int. Cl.: F16D 65/12, B64C 25/42

(54) **PROCÉDÉ D'ATTÉNUATION DES VIBRATIONS DES ROUES FREINÉES D'AÉRONEF**
VERFAHREN ZUR VIBRATIONSDÄMPFUNG GEBREMSTER LUFTFAHRZEUGRÄDER
METHOD OF ATTENUATING VIBRATIONS OF BRAKED AIRCRAFT WHEELS

(30) Priorité: 24.04.2017 FR 1753531
(43) Date de publication de la demande: 04.03.2020
(73) Titulaire: Safran Landing Systems, 78140 Vélizy-Villacoublay (FR)
(72) Inventeur: GATT, Antoine, 78000 Versailles (FR); HAMDI, Abdelbasset, 78140 Velizy Villacoublay (FR); AUREGAN, Gilles, 67000 Starsbourg (FR); DIEBOLD, Jean-Frédéric, 92100 Boulogne-Billancourt (FR)
(74) Mandataire: Lavialle, Bruno François Stéphane
(86) Numéro de dépôt international: PCT/EP2018/060409
(87) Numéro de publication internationale: WO 2018/197448

(56) Documents cités:
- FR-A1- 2 887 559
- US-A- 3 605 967
- US-A- 5 931 269
- US-A1- 2007 175 709
- US-A1- 2009 236 763
- US-A1- 2010 104 465

## Description

L'invention concerne un procédé d'atténuation des vibrations des roues freinées d'aéronef survenant lors d'un freinage.

### ARRIERE-PLAN DE L'INVENTION

On sait que des vibrations sont susceptibles d'intervenir lors de freinages d'un aéronef dans les roues équipées de freins. Ces vibrations résultent de phénomènes dynamiques complexes et ont reçu plusieurs traitements. On a par exemple proposé d'équiper le circuit hydraulique alimentant les freins de restricteurs pour éviter des à-coups hydrauliques susceptibles de donner naissance à des vibrations. On a également proposé d'équiper le pied du tube de torsion d'une bague anti-vibrations (anti-whirl) diminuant l'intensité des vibrations.

Ces solutions ne sont pas sans inconvénients. Les restricteurs limitent de fait les débits disponibles pour la commande des freins et en limitent donc la dynamique. Par ailleurs l'utilisation d'une bague anti-vibration oblige à équiper le tube de torsion d'un pied, ce qui complexifie le tube et l'alourdit. Le document FR2887559 décrit un dispositif de freinage en alliage d'acier inoxydable au chrome-nickel ayant un revêtement d'oxydes métalliques adhérent et résistant à l'usure, et un procédé de formation d'un revêtement d'oxydes métalliques adhérent et résistant à l'usure sur un article en alliage d'acier inoxydable au chrome-nickel.

### OBJET DE L'INVENTION

L'invention vise à proposer un procédé d'atténuation des vibrations des roues freinées d'aéronef lors de freinages, ne présentant pas les inconvénients précités.

### BREVE DESCRIPTION DE L'INVENTION

En vue de la réalisation de ce but, on propose un procédé d'atténuation de vibrations d'un ensemble roue/frein d'aéronef selon la revendication

Les inventeurs ont réalisé des simulations de freinage poussées intégrant le coefficient de frottement des interfaces entre les disques et les tenons ou barrettes. Ces simulations ont permis de découvrir une influence très sensible de ce coefficient de frottement sur le niveau de vibrations générées lors des freinages. En particulier, il apparaît que les amplitudes vibratoires (caractérisées par les accélérations développées et mesurées en g) sont globalement proportionnelles au coefficient de frottement entre les disques et les tenons ou barrettes. Les inventeurs ont ainsi découvert qu'un choix d'interfaces présentant un coefficient de frottement inférieur ou égal à 0,6 permet d'atténuer ce niveau de vibrations. Pour rappel, lorsqu'un aéronef touche le sol, les rotors des freins qui étaient auparavant dans la soute sont mis en rotation et sont soumis à la température environnante et au flux d'air lié au déplacement de l'aéronef. On peut estimer que la température des cavaliers, barrettes et tenons est comprise entre -40°C et + 40°C environ. Lorsque l'effort de freinage est exercé, la température des cavaliers, barrettes et tenons va rapidement augmenter. On estime que cette température reste la plupart du temps inférieure à une température maximale extrême de 400°C environ (d'autres parties du frein pouvant être plus chaudes ou au contraire moins chaudes). Dans les conditions d'un freinage à l'atterrissage d'un aéronef, la plage de température vue par l'interface des cavaliers avec la roue ou le tube est donc comprise entre -40°C et 400°C

De tels coefficients de frottement peuvent être obtenus en choisissant de façon adéquate la matière des cavaliers qui équipent les disques et qui viennent en contact avec les tenons et barrettes, la matière des tenons et barrettes, ou en équipant ces derniers d'un revêtement propre à obtenir de tels coefficients de frottement.

### BREVE DESCRIPTION DES DESSINS

L'invention sera mieux comprise à la lumière de la description qui suit en référence aux figures des dessins annexés, parmi lesquelles :
- la figure 1 est une vue en perspective d'un tube de torsion d'un frein équipé de tenons et sur lequel des disques de freins sont enfilés. Seuls les disques stators sont représentés ;
- la figure 2 est une vue en perspective des disques rotor du frein de la figure 1 recevant dans leurs encoches des barrettes de la roue à freiner ;
- La figure 3 est une vue en perspective d'un cavalier équipant une encoche d'un disque rotor ;
- la figure 4 est un graphe montrant les vibrations générées par un freinage, avec respectivement un coefficient de frottement de 0,6 et un coefficient de frottement de 0,2
- la figure 5 est un graphe montrant la relation entre le coefficient de frottement et le niveau maximal de vibrations.

### DESCRIPTION DETAILLEE DE L'INVENTION

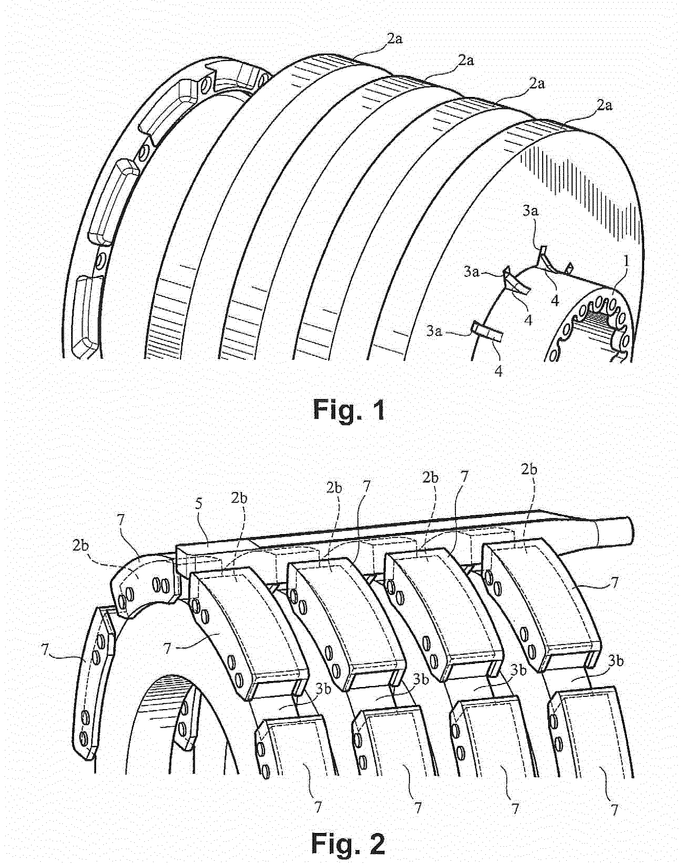

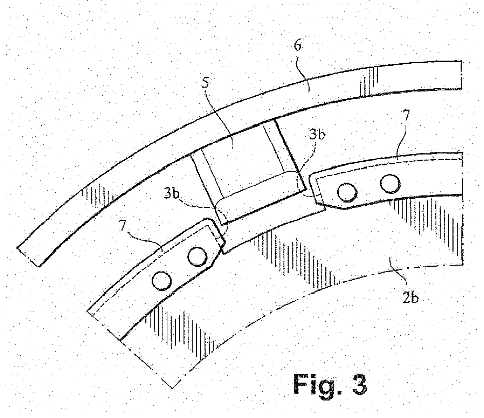

De façon connue en soi, et comme cela est illustré aux figures 1 et 2, un frein typique d'aéronef moderne, par exemple un frein d'avion de ligne du type de ceux produits par les sociétés AIRBUS ou BOEING, comporte un tube de torsion 1 sur lequel des disques en carbone sont enfilés. Parmi ces disques, on compte des disques stators 2a qui comportent des encoches 3a dans lesquelles sont engagés des tenons 4 solidaires du tube de torsion, de sorte que les disques stators 2a sont immobilisés en rotation. Ici les tenons 4 sont venus de matière avec le tube de torsion 1, mais ils pourraient être rapportés sur le tube de torsion. En alternance avec les disques stators 2a, on trouve des disques rotors 2b qui comportent des encoches 3b dans lesquelles sont engagées des barrettes 5 solidaires de la jante 6 d'une roue (visible à la figure 3) qui s'étend autour des freins, de sorte que les disques rotors tournent avec la roue. Ici, les barrettes 5 sont rapportées sur la jante de la roue, mais elles pourraient être venues de matière avec la jante. Le frein comporte des actionneurs de freinage hydrauliques ou électromécaniques (non représentés ici), qui pressent sélectivement les disques entre eux pour générer un effort de frottement entre les disques et ainsi freiner la roue. Comme cela est illustré à la figure 3, les flancs des encoches sont généralement protégés par des cavaliers 7 qui définissent l'interface entre les disques et les tenons ou barrettes.

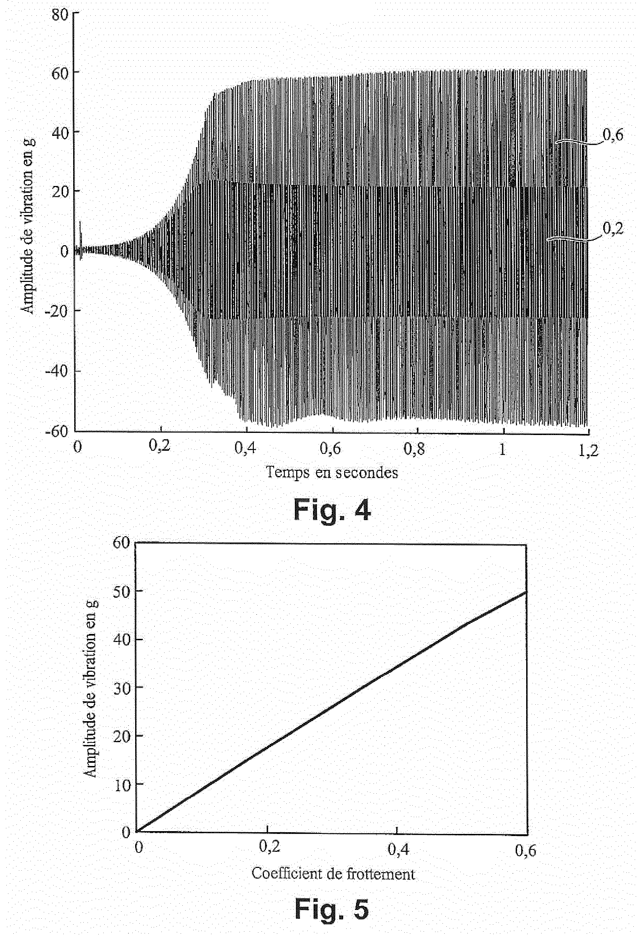

Sur la figure 4 a été représentée l'amplitude des vibrations sous la forme du niveau d'accélération (mesuré en g) induit par les vibrations intervenant lors d'un freinage, en retenant respectivement un coefficient de frottement de 0,6 et un coefficient de frottement de 0,2 pour l'interface entre les disques et les tenons ou barrettes. Après une phase initiale de naissance et de développement, les vibrations se stabilisent en quelques dixièmes de secondes à un niveau d'amplitude maximale, qui reste relativement constant. Les inventeurs ont remarqué que l'influence du coefficient de frottement est déterminante. On constate que le niveau de vibration baisse quand le coefficient de frottement baisse. Dans la simulation illustrée, le coefficient de frottement de 0,6 conduit à une amplitude de vibration de ± 60g, tandis que le coefficient de frottement de 0,2 aboutit à une amplitude de vibration de ± 20g.

Cette découverte a incité les inventeurs à explorer l'influence de ce paramètre. La figure 5 montre le résultat obtenu en faisant varier ce paramètre, à savoir que l'amplitude maximale des vibrations est sensiblement proportionnelle au coefficient de frottement retenu.

Ainsi, le choix d'interfaces présentant un coefficient de frottement inférieur ou égal à 0,6 permet de limiter efficacement l'amplitude maximale des vibrations. Un tel coefficient de frottement peut être obtenu de différentes manières, comme par exemple :
- en choisissant un couple de matériau pour l'interface cavalier/tenon ou cavalier/barrette à faible coefficient de frottement ;
- en appliquant sur le cavalier un revêtement de surface présentant avec les barrettes ou tenons un faible coefficient de frottement ;
- en appliquant sur les barrettes ou les tenons d'un revêtement de surface présentant avec les cavaliers un faible coefficient de frottement ;
- en recouvrant les barrettes ou les tenons d'une tôle de protection présentant avec les cavaliers un faible coefficient de frottement...

L'obtention de tels coefficients de frottement a pu être vérifiée par diverses expérimentations détaillées ci-dessous, aboutissant à des coefficients de frottement mesurés inférieurs à 0,6, allant jusqu'à 0,2 ou moins. Ces expérimentations concernent des combinaisons barrettes/cavaliers, mais peuvent bien entendu s'appliquer à des combinaisons tenons/cavaliers :

### Premier exemple:

- cavaliers en acier 15CrMoV6 ;
- barrettes en acier X5CrNiMo16-5 avec un revêtement en carbure de tungstène enrichi de cobalt (WC/Co/Cr) sans rectification, rugosité Ra=3,2 microns.
Une identification au tribomètre donne un coefficient de frottement de sensiblement 0,5.

### Deuxième exemple:

- cavaliers en acier 17-22AS ;
- barrettes en acier X5CrNiMo16-5 avec un revêtement en carbure de tungstène enrichi de cobalt (WC/Co/Cr) rectifié avec une rugosité Ra=1,6 microns.
Une identification au tribomètre donne un coefficient de frottement entre 0,2 et 0,4.

### Troisième exemple:

- cavaliers en acier 15CrMoV6, avec dépôt en surface de particules de carbone;
- barrettes en acier X5CrNiMo16-5 avec un revêtement en carbure de tungstène enrichi de cobalt (WC/Co/Cr) sans rectification, rugosité Ra=3,2 microns, avec dépôt en surface de particules de carbone.
Une identification au tribomètre donne un coefficient de frottement de sensiblement 0,2.

Il est ainsi techniquement possible d'obtenir des coefficients de frottement inférieurs à 0,6, et même bien plus bas, de l'ordre de 0,2. Un coefficient de frottement aussi bas a permis de limiter le niveau maximal d'accélération à ± 20g dans les simulations menées par les inventeurs, ce qui répond aux spécifications récentes émises par certains avionneurs

Il est possible dans les exemples décrits d'abaisser le coefficient de frottement en réduisant la rugosité.

L'invention n'est pas limitée à ce qui vient d'être décrit, mais bien au contraire englobe toute variante entrant dans le cadre défini par la revendication.

## Revendications

1. Procédé d'atténuation de vibrations d'un ensemble roue/frein d'aéronef survenant lors d'un freinage, le frein comportant des disques rotors (2b) entraînés en rotation avec la roue au moyen de barrettes (5) solidaires de la roue et engagées dans des encoches (3b) des disques rotors, et des disques stators (2a) maintenus immobiles en rotation au moyen de tenons (4) solidaires d'un tube de torsion (1) du frein et engagés dans des encoches (3a) des disques stators, les encoches ayant des flancs protégés par des cavaliers (7), **caractérisé en ce que** l'on sélectionne l'un des couples cavaliers/tenons et/ou cavaliers/barrettes suivant :
- cavaliers en acier 15CrMoV6, et
- barrettes ou tenons en acier X5CrNiMo16-5 avec un revêtement en carbure de tungstène enrichi de cobalt (WC/Co/Cr) sans rectification, rugosité Ra≤3,2 microns ; ou
- cavaliers en acier 17-22AS, et
- barrettes ou tenons en acier X5CrNiMo16-5 avec un revêtement en carbure de tungstène enrichi de cobalt (WC/Co/Cr) rectifié avec une rugosité Ra≤1,6 microns ;
ou
- cavaliers en acier 15CrMoV6, avec dépôt en surface de particules de carbone, et
- barrettes ou tenons en acier X5CrNiMo16-5 avec un revêtement en carbure de tungstène enrichi de cobalt (WC/Co/Cr) sans rectification, rugosité Ra≤3,2 microns avec dépôt en surface de particules de carbone.

## Patentansprüche

1. Verfahren zur Dämpfung von Vibrationen einer Rad/Bremse-Einheit eines Luftfahrzeugs, die während einer Bremsung auftreten, wobei die Bremse Rotorscheiben (2b) umfasst, die mit dem Rad mittels Stäben (5) in Drehung angetrieben werden, die fest mit dem Rad verbunden und in Einkerbungen (3b) der Rotorscheiben eingefügt sind, und Statorscheiben (2a), die mittels Zapfen (4) in Drehung unbeweglich gehalten werden, die fest mit einem Torsionsrohrs (1) der Bremse verbunden und in Einkerbungen (3a) der Statorscheiben eingefügt sind, wobei die Einkerbungen Flanken haben, die durch Bügel (7) geschützt sind, **dadurch gekennzeichnet, dass** man eines der folgenden Paare Bügel/Zapfen und/oder Bügel/Stäbe auswählt:
- Bügel aus Stahl 15CrMoV6 und
- Stäbe oder Zapfen aus Stahl X5CrNiMo16-5 mit einem Überzug aus Wolframcarbid, angereichert mit Cobalt (WC/Co/Cr), ungeschliffen, Rauheit Ra≤3,2 Mikrometer;
oder
- Bügel aus Stahl 17-22AS und
- Stäbe oder Zapfen aus Stahl X5CrNiMo16-5 mit einem Überzug aus Wolframcarbid, angereichert mit Cobalt (WC/Co/Cr), geschliffen, mit einer Rauheit RA≤1,6 Mikrometer;
oder
- Bügel aus Stahl 15CrMoV6, mit einer Oberflächenablagerung von Kohlenstoffpartikeln und
- Stäben oder Zapfen aus Stahl X5CrNiMo16-5 mit einem Überzug aus Wolframcarbid, angereichert mit Cobalt (WC/Co/Cr), ungeschliffen, Rauheit RA ≤3,2 Mikrometer mit einer Oberflächenablagerung von Kohlenstoffpartikeln.

## Claims

1. A method for attenuating vibrations in an aircraft wheel/brake assembly that arise during braking, with the brake comprising rotor discs (2b) rotationally driven with the wheel by means of bars (5) secured to the wheel and engaged in notches (3b) of the rotor discs, and stator discs (2a), which are kept rotationally immobile by means of tenons (4) secured to a torque tube (1) of the brake and engaged in notches (3a) of the stator discs, the notches having sides protected by brackets (7), **characterized in that** one of the following bracket/tenon and/or bracket/bar pairs is selected:
- brackets made of 15CrMoV6 steel;
- bars or tenons made of X5CrNiMol6-5 steel with a coating of cobalt enriched tungsten carbide (WC/Co/Cr), unground with roughness Ra of ≤ 3.2 microns
or
- brackets made of 17-22AS steel;
- bars or tenons made of X5CrNiMol6-5 steel with a coating of cobalt enriched tungsten carbide (WC/Co/Cr), ground with roughness Ra of ≤ 1.6 microns
or
- brackets made of 15CrMoV6 steel, with a surface deposit of carbon particles;
- bars or tenons made of X5CrNiMol6-5 steel with a coating of cobalt enriched tungsten carbide (WC/Co/Cr), unground with roughness Ra of ≤ 3.2 microns, with a surface deposit of carbon particles.
